# EUROPEAN PATENT APPLICATION

(11) **EP 4 528 086 A1**
(43) Date of publication of application: **26.03.2025**
(21) Application number: 22941873.6
(22) Date of filing: 19.05.2022
(51) Int. Cl.: F01N 3/22, F01N 3/24

(54) **DEVICE AND METHOD FOR CONTROLLING OXYGEN STORAGE AMOUNT IN THREE-WAY CATALYST**

(71) Applicant: NISSAN MOTOR CO., LTD., Kanagawa 221-0023 (JP)
(72) Inventor: NISHI, Daiki, Atsugi-shi, Kanagawa 243-0123 (JP); LIU, Lin, Atsugi-shi, Kanagawa 243-0123 (JP); WATANABE, Kei, Atsugi-shi, Kanagawa 243-0123 (JP); TSUYUKI, Takeshi, Atsugi-shi, Kanagawa 243-0123 (JP)
(74) Representative: Hoefer & Partner Patentanwälte mbB
(86) International application number: PCT/JP2022/020843
(87) International publication number: WO 2023/223504

(57) **Abstract**

An exhaust passage (14) of an internal combustion engine (1) is provided with a three-way catalyst (15), and the air-fuel ratio is feedback controlled so as to maintain the oxygen storage amount in the three-way catalyst (15) at a target oxygen storage amount. An estimated oxygen storage amount (b1) is obtained from an intake air amount and an exhaust air-fuel ratio detected by an air-fuel ratio sensor (19), and a target air-fuel ratio is set in accordance with the difference between the target oxygen storage amount (b2) and the estimated oxygen storage amount (b1). The target oxygen storage amount (b2) is set with the characteristic of becoming lower as the intake air amount becomes higher, on the basis of the intake air amount corresponding to the flow rate of gas flowing into the three-way catalyst (15). The foregoing cancels out an increase in the NOx slip ratio when the gas flow rate is high.

## Description

### Technical Field

The present invention relates to a method and a device for suitably controlling a quantity of oxygen stored in a three-way catalytic converter provided in an exhaust passage of an internal combustion engine.

### Background Art

Where exhaust gas contains CO, HC, and NOx, a three-way catalytic converter is capable of oxidizing CO and HC and reducing NOx. In order to allow catalytic action thereof to achieve high levels of oxidation and reduction, it is important that the catalytic converter has a capability to store and release oxygen, which is known as oxygen storage capability. In relation to this viewpoint, a technique is known in which a quantity of oxygen stored in a three-way catalytic converter is monitored, and a target air fuel ratio for air fuel ratio feedback control is variably controlled so as to maintain the stored oxygen quantity at an intermediate target value (e.g., 50%).

Furthermore, a patent document 1 discloses that, based on a load and rotational speed of an internal combustion engine, a target stored oxygen quantity is set to be relatively small under operating conditions that result in high NOx emissions, and is set to be relatively large under operating conditions that result in high CO and HC emissions.

According to new findings by the present inventors, an optimal target stored oxygen quantity correlates with a flow rate of gas flowing into a three-way catalytic converter. When the flow rate of gas flowing through the three-way catalytic converter is large, the gas passing through a catalytic layer of the three-way catalytic converter has a high flow velocity, and thereby raises a slip rate of NOx, wherein the slip rate is a proportion of NOx that passes through without being converted. Therefore, it is desirable to lower a quantity of oxygen stored in the three-way catalytic converter as the gas flow rate increases.

Patent document 1 is silent about such control of a stored oxygen quantity in relation to a gas flow rate.

### Prior Art Document(s)

### Patent Document(s)

Patent Document 1: Japanese Patent Application Publication No. 2000-008921

### Summary of Invention

According to the present invention, a method for controlling a quantity of oxygen stored in a three-way catalytic converter of an internal combustion engine, wherein the three-way catalytic converter is arranged in an exhaust passage of the internal combustion engine, includes: feedback-controlling an air fuel ratio of the internal combustion engine in accordance with an air fuel ratio setpoint in vicinity of a stoichiometric point; controlling the air fuel ratio setpoint so as to conform the quantity of stored oxygen to a target value; and setting the target value of the quantity of stored oxygen in accordance with a flow rate of gas entering the three-way catalytic converter such that the target value decreases as the flow rate of gas increases.

The setting that the target value of the stored oxygen quantity decreases as the flow rate of gas entering the three-way catalytic converter increases, serves to cancel an increase in slip rate of NOx caused by an increase in gas flow velocity, and thereby purify NOx more reliably.

### Brief Description of Drawings

FIG. 1 is a diagram illustrating configuration of an internal combustion engine equipped with a three-way catalytic converter according to an embodiment of the present invention.
FIG. 2 is an explanatory diagram showing a control flow according to the embodiment.
FIG. 3 is a characteristic diagram showing characteristics of a target stored oxygen quantity with respect to an intake air quantity.
FIG. 4 is a time chart showing an example of changes in (a) the intake air quantity, (b) a stored oxygen quantity, (c) a target air fuel ratio, and (d) an actual air fuel ratio.

### Mode(s) for Carrying Out Invention

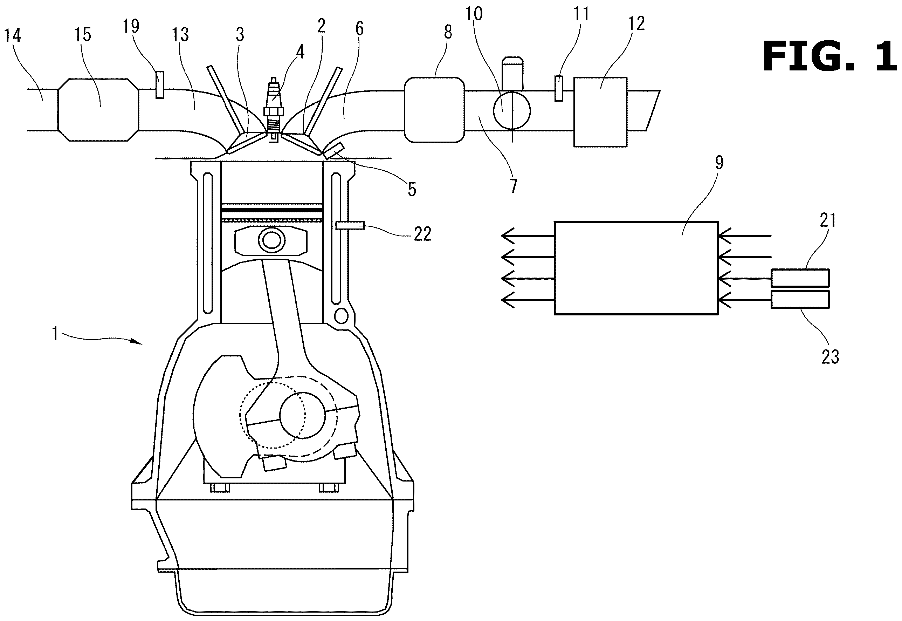

The following describes an embodiment of the present invention in detail with reference to the drawings. FIG. 1 is an explanatory diagram showing a schematic configuration of an internal combustion engine 1 according to the embodiment of the present invention. The internal combustion engine 1 is a four-stroke cycle spark ignition internal combustion engine (a so-called gasoline engine), and includes cylinders each of which is provided with an intake valve 2, an exhaust valve 3, and an ignition plug 4. In the illustrated example, the internal combustion engine 1 is configured as an incylinder direct injection type in which a fuel injection valve 5 is arranged closer to the intake valve 2 for injecting fuel into the cylinder. Alternatively, the internal combustion engine 1 may be configured as a port injection type in which fuel is injected toward an intake port 6.

An electronically controlled throttle valve 10 is interposed upstream of a collector section 8 of an intake passage 7 which is connected to the intake port 6 of each cylinder. The opening of the throttle valve 10 is controlled by a control signal from an engine controller 9. An air flow meter 11 is disposed upstream of the throttle valve 10 for sensing a quantity of intake air. An air cleaner 12 is disposed upstream of the airflow meter 11.

Each cylinder includes an exhaust port 13 joined with the other exhaust ports 13 to form a single exhaust passage 14. The exhaust passage 14 is provided with a three-way catalytic converter 15 for purifying exhaust gas. In this example, the three-way catalytic converter 15 is a so-called monolithic ceramic catalytic converter in which a catalytic layer containing a catalytic metal is coated on a surface of a monolithic ceramic body having fine passages formed therein. The three-way catalytic converter 15 may be configured to include a plurality of catalytic converters arranged in series (for example, a manifold catalytic converter and an underfloor catalytic converter).

For sensing an exhaust air fuel ratio, an air fuel ratio sensor 19 is disposed on the inlet side of the three-way catalytic converter 15 in the exhaust passage 14, that is, disposed upstream of the three-way catalytic converter 15 in the exhaust passage 14. The air fuel ratio sensor 19 is a so-called wide-range air fuel ratio sensor that provides an output in accordance with the exhaust air fuel ratio. A second air fuel ratio sensor, such as an O2 sensor, may be further provided downstream of the three-way catalytic converter 15 for calibrating an air fuel ratio feedback control system including the air fuel ratio sensor 19, diagnosing deterioration of the three-way catalytic converter 15, etc.

Sensing signals from the air fuel ratio sensor 19 and the air flow meter 11 are inputted to the engine controller 9. The engine controller 9 further receives input of sensing signals from multiple sensors and the like, such as a crank angle sensor 21 for sensing engine speed, a water temperature sensor 22 for sensing a cooling water temperature, and an accelerator opening sensor 23 for sensing an amount of depression of an accelerator pedal operated by a driver. Based on these input signals, the engine controller 9 optimally controls a quantity and a timing of fuel injection performed by the fuel injection valve 5, a timing of ignition performed by the spark plug 4, the opening of the throttle valve 10, and others.

The engine controller 9 performs an air fuel ratio control as one of various controls for the internal combustion engine 1, wherein the air fuel ratio control is intended for optimizing exhaust purification performance of the three-way catalytic converter 15. The air fuel ratio control is a feedback control (for example, PID control) of the fuel injection quantity based on the exhaust air fuel ratio sensed by the air fuel ratio sensor 19, for conforming the air fuel ratio to a target air fuel ratio near the stoichiometric air fuel ratio. The target air fuel ratio is controlled so as to conform a stored oxygen quantity of the three-way catalytic converter 15 to a target stored oxygen quantity, wherein the stored oxygen quantity is estimated from the exhaust air fuel ratio.

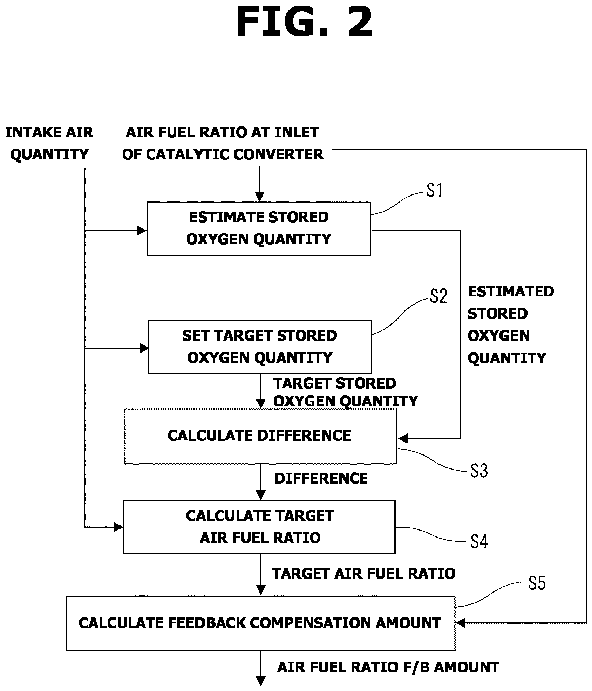

FIG. 2 is an explanatory diagram showing a flow of the air fuel ratio control based on the stored oxygen quantity, in a form like a flowchart. At operations shown as Steps S1, S2, and S4, the intake air quantity sensed by the air flow meter 11 is inputted as a parameter corresponding to a flow rate of gas flowing into the three-way catalytic converter 15. It is to be noted that "intake air quantity" does not mean a quantity of air per cylinder cycle, but means a flow rate of air taken into the internal combustion engine 1 (i.e., passing through the air flow meter 11) per unit time. Furthermore, at the operation shown as Step S1 and an operation shown as Step S5, the exhaust air fuel ratio (catalytic converter inlet air fuel ratio) sensed by the air fuel ratio sensor 19 is inputted. At Step S1, the stored oxygen quantity of the three-way catalytic converter 15 is estimated based on the exhaust air fuel ratio sensed by the air fuel ratio sensor 19 and the flow rate of gas flowing into the three-way catalytic converter 15, i.e., the intake air quantity. This estimation is implemented by increasing or reducing the stored oxygen quantity depending on a value of the exhaust air fuel ratio at the moment at each cycle of calculation of the engine controller 9. Put simply, when the exhaust air fuel ratio of the exhaust gas flowing into the three-way catalytic converter 15 is lean, the stored oxygen quantity increases, and when the exhaust air fuel ratio is rich, the stored oxygen quantity decreases. Accordingly, a value of the stored oxygen quantity at the moment is estimated by integrating both positive and negative values. This quantity is henceforth referred to as "estimated stored oxygen quantity".

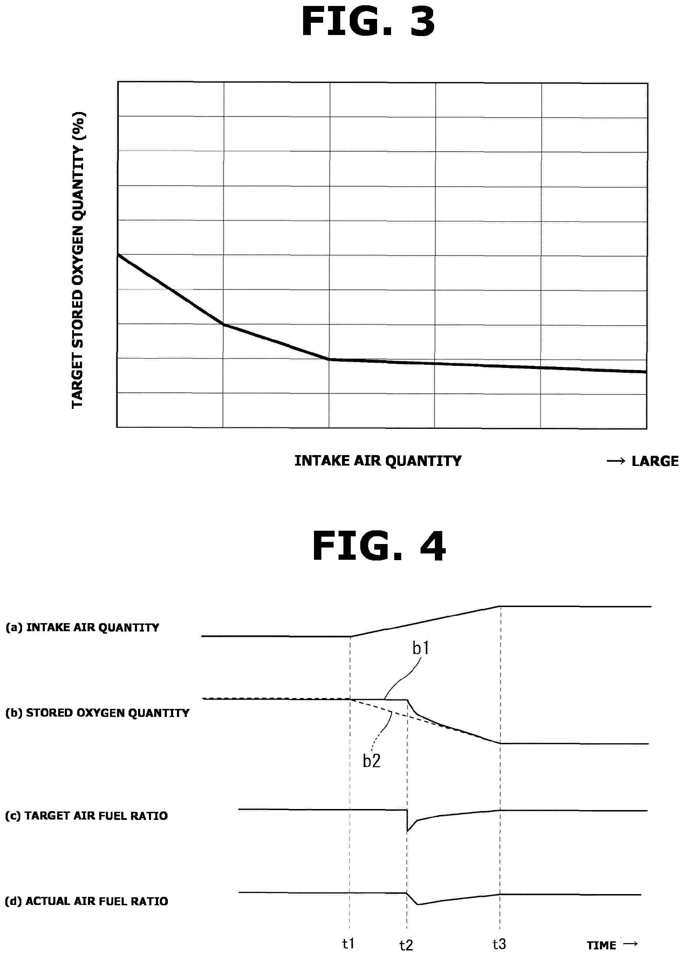

At Step S2, a target stored oxygen quantity is set based on the flow rate of gas flowing into the three-way catalytic converter 15, i.e., the intake air quantity. FIG. 3 shows characteristics of the target stored oxygen quantity with respect to the intake air quantity. In this example, the engine controller 9 is provided with characteristics as shown in FIG. 3 in the form of a table, wherein the target stored oxygen quantity is outputted with respect to input of the intake air quantity. As shown in FIG. 3, the target stored oxygen quantity has a characteristic that the target stored oxygen quantity decreases as the intake air quantity increases. Specifically, between the intake air quantity and the target stored oxygen quantity, a relationship is characterized in that the target stored oxygen quantity relatively rapidly decreases with respect to increase in the intake air quantity in a region where the intake air quantity is relatively small, and the target stored oxygen quantity relatively slowly decreases with respect to increase in the intake air quantity in a region where the intake air quantity is relatively large (a region on the right side of FIG. 3).

At Step S3, the target stored oxygen quantity obtained at Step S2 is compared with the estimated stored oxygen quantity obtained at Step S1 to determine a difference therebetween.

This value of difference is one of inputs to the operation of Step S4. At Step S4, the target air fuel ratio (the target air fuel ratio on the inlet side of the three-way catalytic converter 15) is calculated using the value of difference and the flow rate of gas flowing into the three-way catalytic converter 15, i.e., the intake air quantity. For example, when the estimated stored oxygen quantity is greater than the target stored oxygen quantity, the target air fuel ratio is controlled to be richer than the stoichiometric air fuel ratio. When the flow rate of gas flowing into the three-way catalytic converter 15 is large, the decrease in the stored oxygen quantity caused by enriching the air fuel ratio becomes relatively rapid. Therefore, the target air fuel ratio is set taking account of the gas flow rate, i.e., the intake air quantity, so that the stored oxygen quantity changes at a suitable speed.

At Step S5, the difference between the target air fuel ratio obtained at Step S4 and the exhaust air fuel ratio sensed by the air fuel ratio sensor 19 (i.e., the actual air fuel ratio) is calculated, and a feedback compensation amount for the fuel injection quantity is outputted by a feedback control such as PID control. Finally, the quantity of fuel injected from the fuel injection valve 5 for each cycle is corrected by this feedback compensation amount.

FIG. 4 is a time chart showing an example of changes in the target stored oxygen quantity and others under the control according to the embodiment described above. FIG. 4 shows, from the top to the bottom, (a) the intake air quantity, (b) the stored oxygen quantity, (c) the target air fuel ratio, and (d) an actual air fuel ratio. The section (b) for the stored oxygen quantity shows the estimated stored oxygen quantity b1 and the target stored oxygen quantity b2 which overlap each other.

In this example time chart, the intake air quantity is constant until a time instant t1, and gradually increases during a period from the time instant t1 to a time instant t3. The estimated stored oxygen quantity b1 and the target stored oxygen quantity b2 in the stored oxygen quantity section are identical to each other until the time instant t1. When the intake air quantity starts to increase at the time instant t1, the target stored oxygen quantity b2 starts to decrease and deviates from the estimated stored oxygen quantity b1.

In accordance with the difference between the target stored oxygen quantity b2 and the estimated stored oxygen quantity b1, the target air fuel ratio changes to the rich side at a time instant t2 as shown in the section (c). Until the time instant t2, the target air fuel ratio has a constant value close to the stoichiometric air fuel ratio in this example. At the time instant t2, the target air fuel ratio changes to the rich side, so that the fuel injection quantity is feedback-controlled to increase, and the actual air fuel ratio changes to the rich side as shown in the section (d). Accordingly, the estimated stored oxygen quantity b1 also gradually decreases.

It is to be noted that FIG. 4 is an explanatory time chart for explaining behavior according to the embodiment described above, and does not necessarily accurately depict actual waveforms. For example, for the period from the time instant t1 to the time instant t2, a delay due to a calculation cycle is exaggerated.

According to the embodiment described above, the target stored oxygen quantity of the three-way catalytic converter 15 is controlled based on the intake air quantity, i.e., the flow rate of gas flowing into the three-way catalytic converter 15, wherein when the gas flow rate is large, the stored oxygen quantity is controlled to be relatively low. When the flow rate of gas flowing into the three-way catalytic converter 15 is large, the flow rate of gas passing through the catalytic layer of the three-way catalytic converter 15 increases, so that the slip rate of NOx tends to increase. In the embodiment described above, the stored oxygen quantity is controlled to be relatively low, thereby cancelling the increase in the slip rate of NOx caused by the increase in gas flow velocity, and thereby purifying NOx more reliably.

Although one embodiment of the present invention has been described above, the present invention is not limited to the embodiment described above and various modifications are possible. For example, in the embodiment described above, the intake air quantity is used as a parameter corresponding to the flow rate of gas flowing into the three-way catalytic converter 15. However, the exhaust gas flow rate may be calculated based on the intake air quantity, taking account of combustion. Alternatively, the exhaust flow rate of gas flowing through the exhaust passage may be sensed by some means.

In the embodiment described above, the intake air quantity may be a mass flow rate or a volume flow rate. For example, the relationship between the target stored oxygen quantity and the intake air quantity shown in FIG. 3 may be set suitable for the mass flow rate or volume flow rate.

## Claims

1. A method for controlling a quantity of oxygen stored in a three-way catalytic converter of an internal combustion engine, wherein the three-way catalytic converter is arranged in an exhaust passage of the internal combustion engine, the method comprising:
feedback-controlling an air fuel ratio of the internal combustion engine in accordance with an air fuel ratio setpoint in vicinity of a stoichiometric point;
controlling the air fuel ratio setpoint so as to conform the quantity of stored oxygen to a target value; and
setting the target value of the quantity of stored oxygen in accordance with a flow rate of gas entering the three-way catalytic converter such that the target value decreases as the flow rate of gas increases.

2. The method as claimed in claim 1, wherein the setting of the target value of the quantity of stored oxygen is implemented by setting the target value such that the target value relatively rapidly decreases with respect to increase in the flow rate of gas in a region where the flow rate of gas is relatively small, and the target value relatively slowly decreases with respect to increase in the flow rate of gas in a region where the flow rate of gas is relatively large.

3. The method as claimed in claim 1, comprising substituting a flow rate of intake air of the internal combustion engine for the flow rate of gas.

4. A device for controlling a quantity of oxygen stored in a three-way catalytic converter of an internal combustion engine, the device comprising:
the three-way catalytic converter being arranged in an exhaust passage of the internal combustion engine;
an air fuel ratio sensor disposed on an inlet side of the three-way catalytic converter; and
a controller configured to control a fuel injection quantity;
wherein the controller is further configured to:
feedback-control an air fuel ratio of the internal combustion engine in accordance with an air fuel ratio setpoint in vicinity of a stoichiometric point;
control the air fuel ratio setpoint so as to conform the quantity of stored oxygen to a target value; and
set the target value of the quantity of stored oxygen in accordance with a flow rate of gas entering the three-way catalytic converter such that the target value decreases as the flow rate of gas increases.
